# EUROPEAN PATENT APPLICATION

(11) **EP 0 748 033 A2**
(43) Date of publication of application: **11.12.1996**
(21) Application number: 96108576.8
(22) Date of filing: 30.05.1996
(51) Int. Cl.: H02K 55/00

(54) **Superconductor motor**

(30) Priority: 07.06.1995 JP 140683/95
(71) Applicant: Toyota Jidosha Kabushiki Kaisha, Toyota-shi, Aichi-ken 471-71 (JP)
(72) Inventor: Kambe, Yoshitaka, c/o Toyota Jidosha K. K., Toyota-shi, Aichi-ken, 471-71 (JP)
(74) Representative: KUHNEN, WACKER & PARTNER

(57) **Abstract**

A superconductor motor comprising a solenoid coil (12) and a rotor (16) arranged in the bore of the solenoid coil (12) and secured to a drive shaft (14). The one-directional magnetic field produced by the solenoid coil (12) acts on the rotor (16), because it has screw blades (30) including a superconductive material. Since the superconductive material blocks the entry of any magnetic field, a magnetic field is formed outside the superconductive screw blades (30). Also as the screw blades (30) do not permit the entry of any magnetic field, a repulsive force is generated on each of the surfaces of the screw blades (30) in a direction perpendicular to the blade surface. Since the screw blades (30) are tilted, the repulsive force has a rotary component. Thus, the rotor (16) is driven to rotate by the force generated as the superconductive material blocks the entry of any magnetic field.

## Description

### BACKGROUND OF THE INVENTION

### [Field of the Invention]

This invention relates to a superconductor motor comprising a field coil which is a solenoid coil and a rotor arranged in the bore of the coil.

### [Prior Art]

A variety of superconductor motors have been proposed. A superconductor motor comprises a superconductor coil that gives rise to little copper loss (energy loss due to electric resistance). Superconductive materials not only show little electric resistance (nil in a perfect superconductive state) but also give rise to a number of extraordinary phenomenon due to the non-existence of electrical resistance. For instance, when a superconductive material is placed in a magnetic field, a permanent diamagnetic electric current flows through it in order to block any magnetic flux from entering into the superconductive material.

Superconductor motors have been proposed to exploit this diamagnetic property of superconductive materials. For example, Japanese Patent Laid-Open No. 64-39262 (JP-A-64039262) discloses a superconductor motor that uses a superconductive material for either the stator or the rotor of the motor in order to produce rotary power by utilizing the diamagnetic property of the superconductive material.

If the rotor of a superconductor motor according to the above patent is made of a superconductive material, it typically has a number of (e.g., seven) triangular projections arranged along the circumference of the rotor at regular intervals. Additionally, three armature windings are arranged outside the rotor at regular intervals vis-a-vis the rotor. With this arrangement, the projections on the rotor have a cyclic period of rotation which is different from that of the armature windings.

When an electric current is made to flow through one of the three armature windings, a diamagnetic electric current flows through the superconductive material rotor as a function of the electric field produced by the armature winding. When the armature winding is located vis-a-vis one of the slopes of the triangular projections, a repulsive force perpendicular to the surface of the slope is generated which drives the rotor to turn. When the armature winding is located vis-a-vis the recess of one of the triangular projections, the repulsive forces generated by the two slopes of the triangular projection are equalized.

However, at the same time, the remaining armature windings are respectively positioned vis-a-vis the slopes of some of the remaining projections. Thus, by sequentially electrically energizing the three armature windings, the rotor is driven to rotate by 1/3 of the period of the projections so that the rotor makes a full turn as it repeats the angular advancement through the number of projections.

In short, in a known superconductor motor having a configuration as described above, a diamagnetic current is generated in the superconductive material rotor by the magnetic fields produced by the armature windings in order to give rise to a torque for driving the motor. The torque is in the form of Maxwell stress between the magnetic fields produced by the armature windings and the superconductive material and is related to the magnetic flux density distribution.

However, such a superconductor motor requires three armature coils which have to be energized and deenergized depending on the angular position of the rotor. In other words, the motor requires a control unit for controlling the energization and deenergization of the armature coils. In addition, the positional relationship between the armature coils and the projections has to be rigorously controlled so that the motor as a whole has a very complicated structure that requires a very complicated control system. And finally, the entire profile of the magnetic field produced by the armature coils changes drastically as the armature coils are turned on and off so that it is technically not feasible to use superconductive coils for the armature coils.

### SUMMARY OF THE INVENTION

In view of the above identified problems in known superconductor motors, it is the object of the present invention to provide a superconductor motor having a simple configuration which is capable of producing a reasonable torque.

According to the invention, the above object is achieved by a superconductor motor comprising a solenoid coil operating as a field coil and a rotor arranged in the bore of the solenoid coil, wherein the rotor includes a screw-shaped superconductor which is driven to rotate by the electric field produced by the solenoid coil. With such an arrangement, a one-directional magnetic field is applied at an angle to the screw-shaped rotor so that both an axial force and a circumferential force, or rotary force, are created by the current generated in the superconductor in order to block the entry of any magnetic field. Thus, the rotor is driven to rotate in only a one-directional magnetic field so that the motor as a whole to be simply configured. The output torque of the motor can be controlled simply by controlling the flow rate of the electric current running through the solenoid coil.

For the purpose of the invention, the solenoid may also be a superconductor coil, in which case, the superconductor motor could produce high output power. If such is the case, both the solenoid coil and the rotor may be housed in the same cooling container.

For the purpose of the invention, the rotor may also be movable along its axis of rotation such that an axial force is produced in response to the particular force the rotor receives.

Alternatively, the rotor may be covered by a non-magnetic member to create a disc-shaped overall profile. Since the superconductor is normally placed in a refrigerant, such an arrangement can reduce the rotor resistance and, consequently, reduce the output torque loss and the rate of evaporation of the refrigerant.

Alternatively, part of the rotor may be put into a normal conducting state by, for example, electrically heating it. In this way, no rotary force will be produced in the heated part so that the output torque of the motor can be controlled by controlling the power supply to the electric heater. Because of this, the drive area of the motor can be enlarged to improve the performance of the motor. Particularly, the output torque of the motor can be easily regulated over a wide range if the rotor has a plurality of blades that are provided with respective electric heaters and the power supply to the heaters can be turned on and off on an individual basis.

Still alternatively, a superconductor motor according to the invention may comprise a pair of rotors at least one of which is provided with an electric heater, which are axially arranged on a shaft and are provided with oppositely twisted screws respectively, so that they produce oppositely directed output torques. In such an arrangement, if no power is supplied to the heater, the motor would not produce any output torque because the rotors would be balanced. In other words, the motor would intrinsically include a braking mechanism such that no additional brake would be needed.

Still alternatively, a superconductor motor according to the invention may comprise an even number of solenoid coils arranged to alternately produce oppositely directed magnetic fields and a similar number of corresponding rotors provided with oppositely directed screws and arranged within the respective bores of the solenoid coils to generate rotary forces in the same direction. Thus, any sliding forces generated in the rotors are offset to improve the durability of the motor.

Finally, a superconductor motor according to the invention may also comprise a plurality of solenoid coils, a similar number of corresponding rotors arranged within the respective bores of the solenoid coils and control means for controlling the energization and deenergization of the rotors on an individual basis. In this way, the direction and the level of the rotary force generated by each of the rotors can be separately controlled by controlling the direction and the intensity of the magnetic field produced by the solenoid coil containing the rotor. Consequently, the range of the drive force on the motor can be greatly broadened as a whole and the output torque of the motor can be analogly controlled.

### BRIEF DESCRIPTION OF THE DRAWINGS

FIG. 1 is a schematic cross-sectional lateral view of a first embodiment of a superconductor motor according to the invention.

FIG. 2 is an enlarged schematic perspective view of the rotor 16 of the embodiment of FIG. 1.

FIG. 3 is a schematic cross-sectional lateral view of one of the screw blades 30 of the rotor 16 of the embodiment of FIG. 2.

FIG. 4 is a schematic illustration of the forces applied to the screw 30 of FIG. 3.

FIG. 5 is a schematic cross-sectional lateral view of a second embodiment of a superconductor motor according to the invention.

FIG. 6 is an enlarged schematic perspective view of a third embodiment of a superconductor motor according to the invention.

FIG. 7 is a schematic cross-sectional lateral view of a fourth embodiment of a superconductor motor according to the invention.

FIG. 8 is an enlarged schematic perspective view of the rotor of the fourth embodiment of FIG. 7, illustrating the profile of one of the heaters 40.

FIG. 9 is a graph illustrating the performance of the motor of the fourth embodiment of FIG. 7.

FIG. 10 is a schematic cross-sectional lateral view of a fifth embodiment of a superconductor motor according to the invention.

FIG. 11 is a graph illustrating the performance of the motor of the fifth embodiment of FIG. 10.

FIG. 12 is a schematic cross-sectional lateral view of a sixth embodiment of a superconductor motor according to the invention.

FIG. 13 is a schematic cross-sectional lateral view of a seventh embodiment of a superconductor motor according to the invention.

FIG. 14 is a graph illustrating the performance of the motor of the seventh embodiment of FIG. 13.

### DETAILED DESCRIPTION OF THE PREFERRED EMBODIMENTS

The present invention will be described in greater detail by referring to the accompanying drawings that illustrate the preferred embodiments of the invention.

### [1st Embodiment]

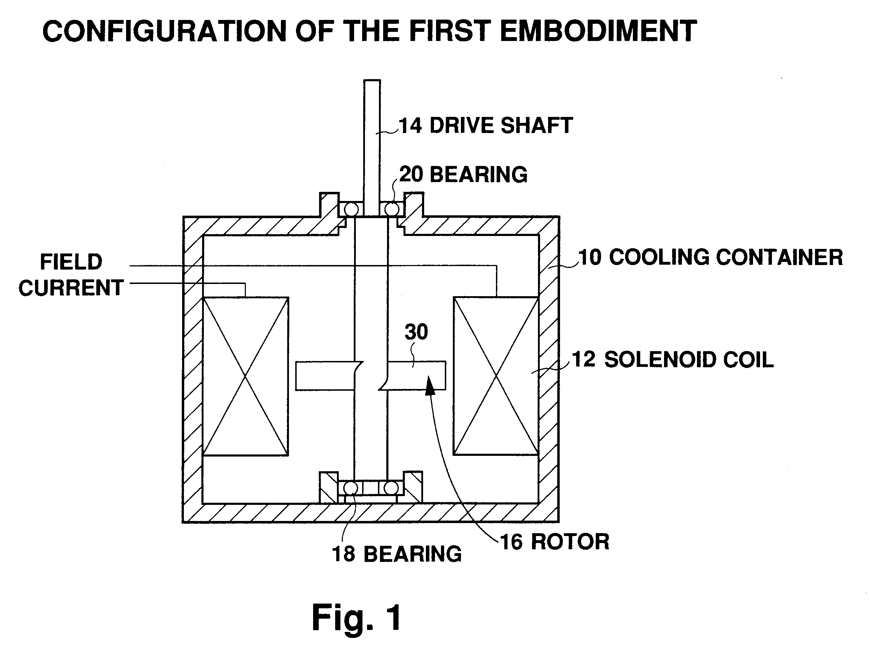

FIG. 1 is a schematic cross-sectional lateral view of a first embodiment of a superconductor motor according to the invention. Referring to FIG. 1, the motor comprises a solenoid coil 12 for the motor field system and a rotor 16 secured to a drive shaft 14, for the transmission of rotary power, all of which are housed in a cooling container 10. The drive shaft 14 is rotatably supported by the bottom wall of the cooling container 10 by way of a bearing 18 and its top runs through the upper wall of the cooling container 10 and is held in position by another bearing 20.

The cooling container 10 has a cylindrical profile and is typically made of a non-magnetic material such as FRP (reinforced plastic) or SUS304 (stainless steel). It contains therein a refrigerant such as liquid helium, liquid hydrogen or liquid nitrogen. The refrigerant is selected depending on the critical temperature of the superconductive material of the rotor. Alternatively, depending on the circumstances, a freezer may also be used to produce a desired temperature without using any refrigerant.

The solenoid coil 12 is placed in the cooling container 10 and has, at the center thereof, a bore (space) for receiving the rotor 16. The solenoid coil is realized by winding a superconductive wire, typically made of NbTi (niobium titanium), and reaches a superconductive state in the refrigerant. Alternatively, a superconductive material made of an oxide of Bi or Y may be used for the solenoid coil. The solenoid coil 12 can be fed with a field current from an external power source so that a permanent current flows. The drive shaft 14 is typically made of a non-magnetic material such as FRP or SUS304 and designed to have a strength to accomodate the output torque of the motor.

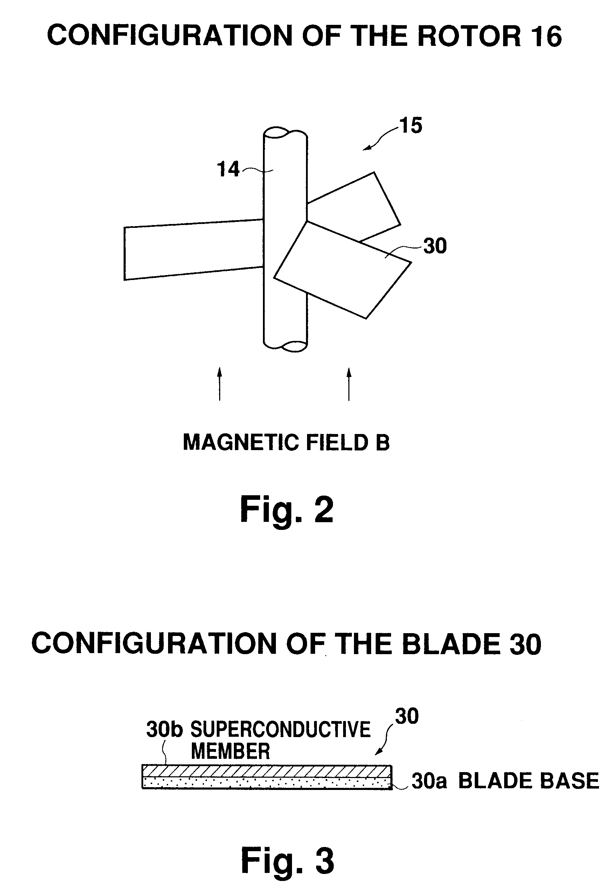

As shown in FIG. 2, the rotor 16 has a plurality of screw blades 30 (three in the drawing) fitted to the outer periphery of the drive shaft 14. FIG. 3 illustrates one of the blades in cross section. It comprises a blade base 30a made of a non-magnetic material and a superconductive member 30b formed on the upper surface of the blade base 30a. The superconductive member 30b is formed by arranging a layer of a superconductive material such as NbTi on the blade base 30a and has a thickness sufficient to block any magnetic flux trying to pass therethrough.

Each of the screw blades 30 has a rectangular plan view and is fitted aslant to the drive shaft 14. Thus, the rotor 16 operates as a screw. Alternatively, each of the screw blades 30 may be realized in any appropriate form that is commonly used for fans or propellers. If the blade base 30a and the rotary shaft 14 are made of the same material, they may be secured to each other easily. If the superconductive member 30b and the solenoid coil 12 are made of a same superconductive material, they may conveniently and effectively reach a superconductive state in the same refrigerant.

Note that the bearings 18, 20 are made of a non-magnetic material such as a ceramic material and the bearing 20 also operates as a sealing member for the cooling container 10. The solenoid coil 12 is securely held in position in the cooling container 10 by means of one or more appropriate guide members made of a non-magnetic material.

When a permanent current is made to flow through the solenoid coil 12 of a superconductor motor having a configuration as described above, a one-directional magnetic field is produced within its bore. For instance, a magnetic field directed from below to above may be formed by the solenoid coil 12. The rotor 16 is arranged within the bore of the solenoid coil 12 and includes a number of screw blades 30 that are arranged aslant relative to the drive shaft of the motor.

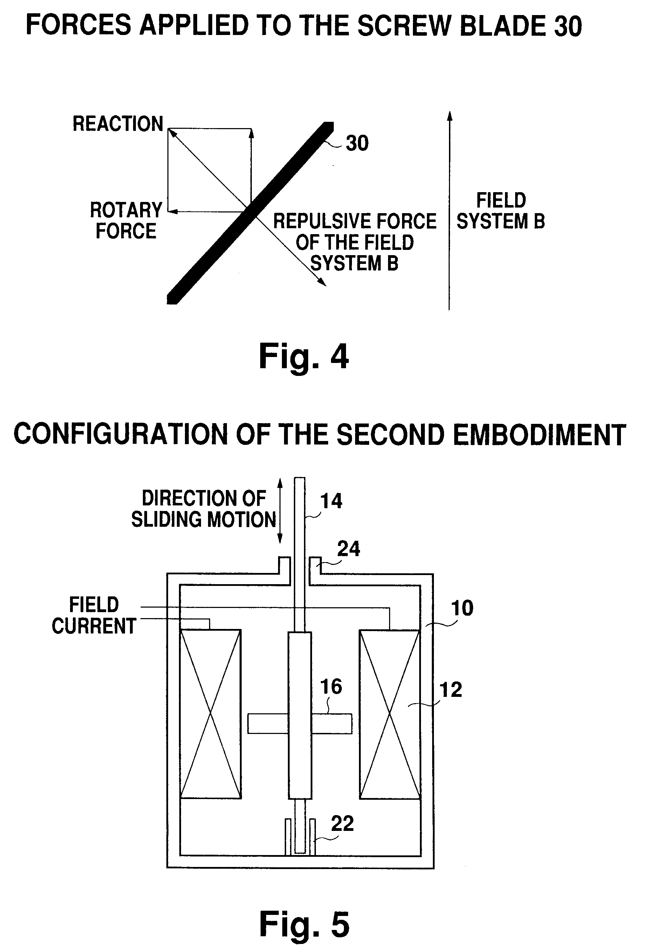

As seen in FIG. 4, a repulsive force is generated against magnetic field B and directed perpendicularly relative to the surface of each of the screw blades 30 to consequently drive the rotor. More specifically, a diamagnetic current runs through the superconductive member 30b on each of the screw blades 30 to completely block the entry of the magnetic flux of the magnetic field B, and a repulsive force against magnetic field B is also generated in the superconductive member 30b by its diamagnetic property, it is directed perpendicularly from the surface of the superconductive member 30b. A reactive repulsive force is also generated so that a component of the reaction directed along the rotary direction of the rotor 16 operates as a rotary force applied to the screw blade 30. Thus, the rotor 16 is driven to rotate by the rotary force and transmits an output torque to the drive shaft.

As described above, this embodiment of a superconductor motor comprises as fundamental components thereof only a solenoid coil 12 and a rotor 16 provided with superconductive members 30b in a very simplified configuration. Since only a one- directional electric current is made to flow through solenoid coil 12, the system for controlling the electric current can be made very simple. The superconductor motor can easily be adapted to high output power operation by increasing the number of rotors 16 and/or that of screw blades 30. Additionally, since a constant electric current can easily be made to flow in only one-direction, a large magnetic field, and thus, high output power may easily be produced by using a superconductive coil for the solenoid coil 12. Particularly, since the solenoid coil 12 can be cooled easily by the same cooling facility used for maintaining the rotor 16 in a superconductive state, a superconductive solenoid can easily be used to enhance the effectiveness of the motor. Note that the rotor can also be driven to rotate in the opposite direction by inverting the flow of the electric current running through the solenoid coil 12.

### [2nd Embodiment]

FIG. 5 is a schematic cross-sectional lateral view of a second embodiment of a superconductor motor according to the invention. The drive shaft 14 of this embodiment is axially slidable. More specifically, the drive shaft 14 is slidably supported by guides 22 and 24, at the bottom and at the upper portion thereof, respectively, so that it may be axially movable whenever necessary.

Since each of the screw blades 30 is subjected to a reaction that is perpendicular to the surface of the blade, there is an axial force component which forces the drive shaft 14 to slide axially.

This axial force and movement makes it possible that the superconductor motor may suitably be used for a drill or some grinding apparatus. Additionally since the rotary force and the axial force has a given fixed ratio, they can be regulated simultaneously without difficulty. The ratio can also be modified by changing the fitting-angle of the screw blades 30 relative to the drive shaft. Note that the rotor can also be driven to rotate in the opposite direction and the drive shaft can be made to slide in the opposite direction by inverting the flow of the electric current running through the solenoid coil 12.

### [3rd Embodiment]

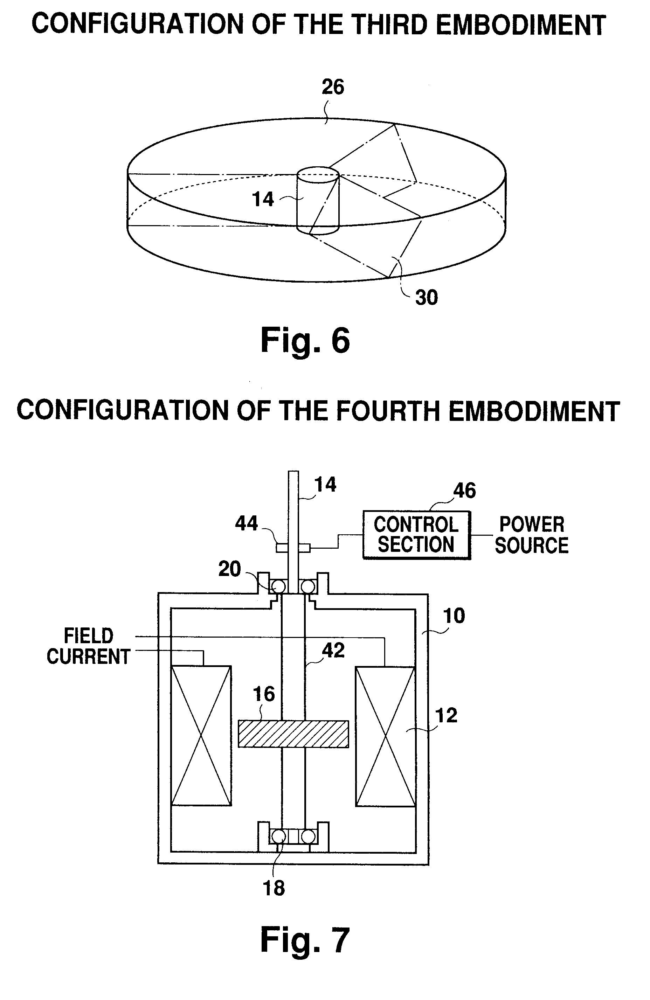

FIG. 6 is an enlarged schematic perspective view of the rotor 16 of a third embodiment of a superconductor motor according to the invention. In this embodiment, the rotor 16 is covered by a molded member made of a non-magnetic material such as FRP and having a disc-shaped overall profile. In other words, the rotor 16 comprises a disc-shaped FRP molded member 26 containing screw blades 30 therein.

Since the molded member 26 is made of a non-magnetic material, the operation of the motor is not affected by the member. Thus, this embodiment operates exactly the same as the first embodiment. However, in addition, both the friction between the revolving rotor 16 and the refrigerant and the turbulence of the refrigerant are minimized by using such a molded member so that the rate of evaporation of the refrigerant is reduced. Finally, since the resistance is reduced, the torque loss of the motor is lessened and the motor can be operated very efficiently.

### [4th Embodiment]

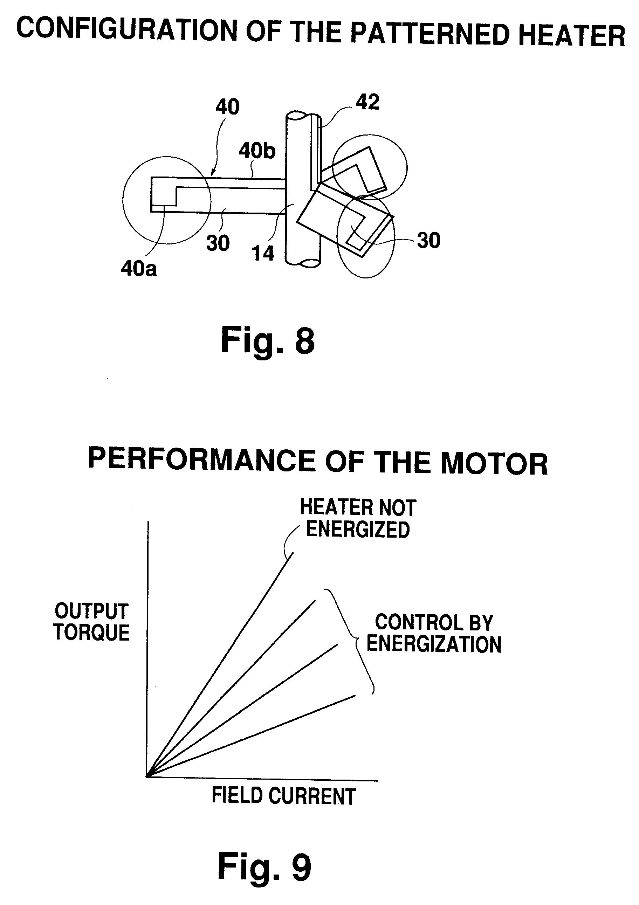

FIGS. 7 and 8 are schematic views for a fourth embodiment of a superconductor motor according to the invention. In this embodiment each of the screw blades 30 of the rotor 16 is provided with a patterned heater 40. As best seen in FIG. 8, the patterned heater 40 comprises a rectangular heater section 40a covering a portion of the front of the screw blade 30 and a wire section 40b extending between the heater section 40a and the drive shaft 14. The wire section 40b is electrically connected to an external power source by way of a wire 42, a slip ring 44 arranged on the drive shaft 14, and a control section 46.

Thus, as the patterned heater 40 is supplied with electric power from the external power source, the heated area of the screw blade 30 is brought to a normal (non-superconducting) conducting state. Then, the magnetic field of the solenoid coil 12 can pass through this area and the reaction force is reduced on part of the screw blade 30. In this embodiment, the three screw blades 30 are provided with respective patterned heaters 40 that are identical and supplied with power from respective slip rings 44, although the three slip rings 44 may be replaced by a single slip ring 44, so that the power supply to the three patterned heaters 40 may be turned on and off by a single action. When the patterned heaters 40 are energized, the corresponding areas of the screw blades 30 are brought into a normal conducting state. Thus, the overall superconductive area of the rotor 16 can be modified by supplying power to the patterned heaters 40 to regulate the motor output torque.

If the patterned heaters 40 of the screw blades 30 are provided with respective slip rings 44 and wires 42 and controlled by a control section 46 for power supply, the motor output torque can be regulated in three steps. It should also be understood that the motor output torque can also be modified by changing the number of and the surface area of the patterned heaters.

FIG. 9 is a graph illustrating the performance of the motor of this fourth embodiment. The motor output torque can be modified for the same field current intensity. Thus, the motor can be operated over a wide output torque range and hence has a wide performance range.

### [5th Embodiment]

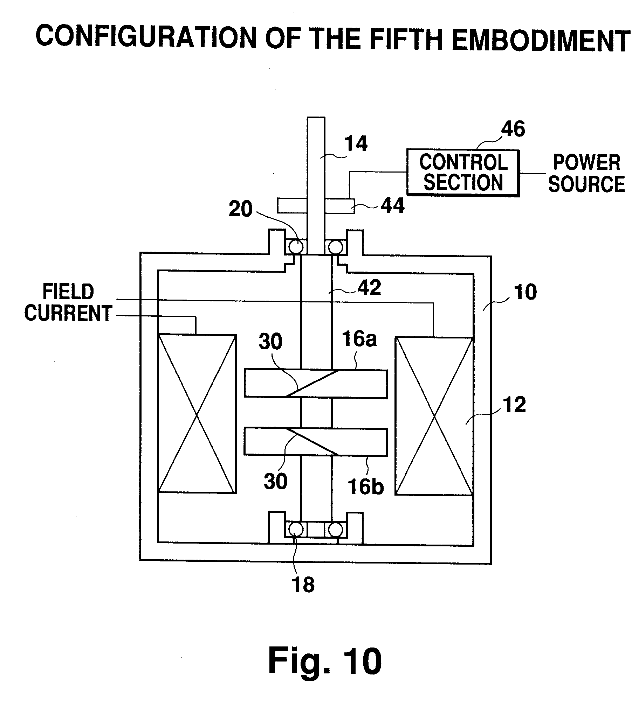

FIG. 10 is a schematic cross-sectional lateral view of a fifth embodiment of a superconductor motor according to the invention. In this embodiment, there are a pair of rotors 16a, 16b on the same drive shaft 14. The rotors 16a, 16b are provided with respective sets of screw blades 30 that are arranged as mirror images. More specifically, if the screw blades 30 of the rotor 16a are twisted clockwise, those of the rotor 16b are twisted counterclockwise. The upper rotor 16a in FIG. 10 is provided with patterned heaters (not shown) as in the case of the fourth embodiment, which are connected to an external power source by way of wires 42, slip rings 44 and a control section 46.

With such a arrangement, when the solenoid coil 12 is energized to produce a magnetic field within its bore, the rotors 16a, 16b are driven to rotate in opposite directions. If the rotors 16a, 16b are configured identically, they generate respective rotary forces that are identical in strength but directed oppositely. In other words, no output torque is produced by the rotary shaft 14.

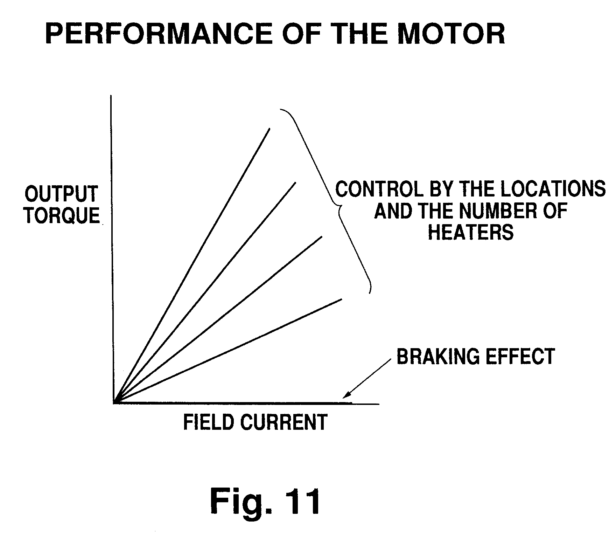

If, however, the patterned heaters 40 of the rotor 16a are energized to reduce its rotary force, the drive shaft 14 produces an output torque that reflects the difference of the rotary force between rotor 16b and rotor 16a. Thus, the output torque of the motor can be modified over a wide range by changing the number and the surface area of patterned heaters. Additionally, the motor can be braked by reducing or removing the power supply to the patterned heaters to bring the output torque to nil. In other words, as shown in FIG. 11, a plurality of levels can be realized for the output torque by controlling the power supply to the patterned heaters by means of the control section 46 without changing the intensity of the field current. When the patterned heaters are not energized, the output torque of the motor is made equal to nil.

Since the motor in this embodiment can be braked by suspending the power supply to the patterned heaters, it does not require the use of any separately provided brake so that the overall size of the motor can be reduced. Additionally, since the rotors 16a, 16b are identical except that they carry respective sets of screw blades to show mirror images relative to each other, they can be operated uniformly as a brake for any level of torque.

If the rotors 16a, 16b are both provided with sets of patterned heaters that are controlled independently, the direction of the output torque of the drive shaft 14 can be controlled by controlling the power supply to the patterned heaters to give rise to a desired level of reverse torque. Then, the rotors can also be operated as reverse brakes.

### [6th Embodiment]

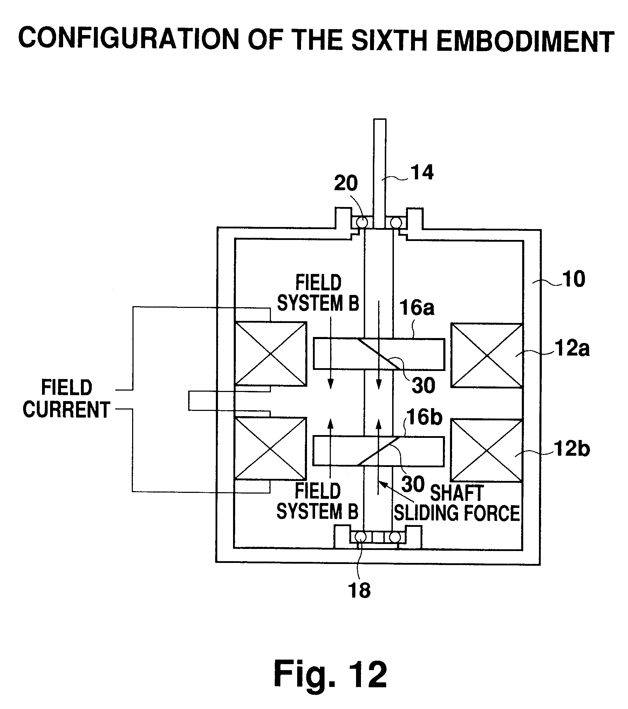

FIG. 12 is a schematic cross-sectional lateral view of a sixth embodiment of a superconductor motor according to the invention. This embodiment comprises two solenoid coils 12a, 12b. A pair of rotors 16a, 16b are respectively arranged in the bores of the solenoid coils. The solenoid coils 12a, 12b have oppositely directed windings to produce oppositely directed magnetic fields. In FIG. 12, the solenoid coil 12a produces a magnetic field B directed from above to below, whereas the solenoid coil 12b produces a magnetic field B directed from below to above. The rotors 16a, 16b are provided with respective sets of screw blades 30 that are directed oppositely. Thus, the rotors 16a, 16b produce identical rotary forces so that the drive shaft 14 shows an output torque equal to the sum of these rotary forces.

It should be noted that, as described earlier by referring to the second embodiment, the rotors 16a, 16b of this embodiment produce not only rotary forces but also axial forces. Since the axial force produced by the rotor 16a is directed downward and the axial force produced by the rotor 16b is directed upward, they are offset by each other to reduce the load on the bearings and hence improve their durability. The embodiment can produce a high output level because of the provision of two solenoid coils 12a, 12b and two rotors 16a, 16b. The screw blades of this embodiment may also be provided with patterned heaters to appropriately control the output torque of the motor.

### [7th Embodiment]

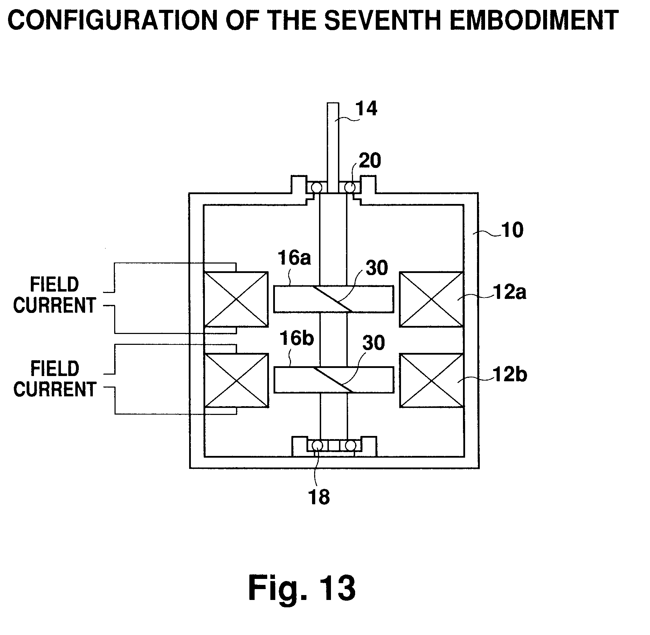

FIG. 13 is a schematic cross-sectional lateral view of a seventh embodiment of a superconductor motor according to the invention. This embodiment also comprises two solenoid coils 12a, 12b, to which respective field currents are supplied from respective power sources. Thus, the permanent currents running respectively through the solenoid coils 12a, 12b can be controlled independently so that the magnetic fields produced by the solenoid coils 12a, 12b can also be controlled independently.

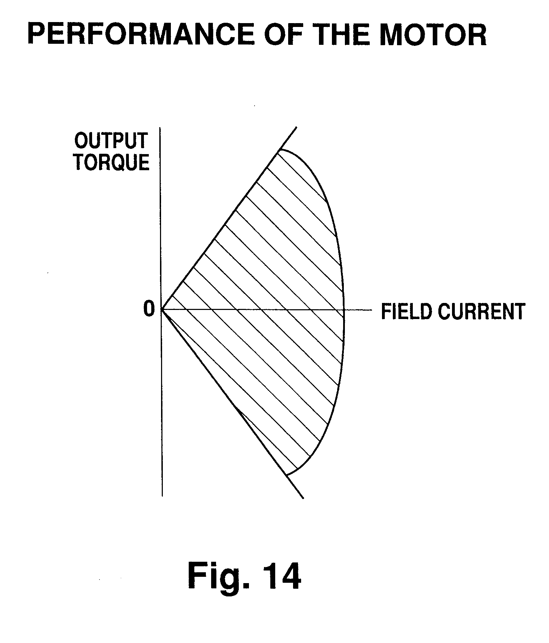

With the above arrangement, the output torque of the motor can vary over a wide range by controlling the direction and the level of the field current for the solenoid coils 12a and 12b as indicated by the shaded area in FIG. 14. The rotation direction and the output torque produced by solenoid coils 12a and 12b can be controlled independently by means of a relatively simple control system to make the motor operate highly efficiently. Note that the screw blades in this embodiment can also be provided with patterned heaters as an additional control for the output level of the motor.

## Claims

1. A superconductor motor comprising a solenoid coil, operating as a field coil, and a rotor arranged in the bore of the solenoid coil, wherein the rotor includes a screw-shaped superconductor; and said rotor is driven to rotate by the electric field produced by the solenoid coil.

2. A superconductor motor according to claim 1, wherein a one-directional DC current is made to flow through said solenoid coil.

3. A superconductor motor according to claim 1, wherein said solenoid coil is a superconductor coil made of a superconductive material.

4. A superconductor motor according to claim 3, wherein said solenoid coil and said rotor are housed in a cooling container.

5. A superconductor motor according to claim 1, wherein the rotor is movable along its axis of rotation in the bore of said solenoid coil.

6. A superconductor motor according to claim 1, wherein said rotor is covered by a non-magnetic material member to create a disc-shaped overall profile.

7. A superconductor motor according to claim 1, wherein said rotor is provided with heaters.

8. A superconductor motor according to claim 7, wherein said rotor has a plurality of blades and said heaters are arranged independently on the respective blades so that the heaters on the blades may be turned on and off independently.

9. A superconductor motor according to claim 1, which further comprises a pair of rotors, arranged on the same axis, and provided with a plurality of screw blades that are directed oppositely and at least either one of the rotors is provided with heaters.

10. A superconductor motor according to claim 9, wherein both of the rotors are provided with heaters that can be energized independently.

11. A superconductor motor according to claim 1, which further comprises an even number of solenoid coils arranged to produce oppositely directed magnetic fields and a similar number of corresponding rotors provided with oppositely directed screws and arranged within the bores of the solenoid coils to generate rotary forces in the same direction.

12. A superconductor motor according to claim 1, which further comprises a plurality of solenoid coils, a similar number of corresponding rotors arranged within the bores of the solenoid coils, and control means for controlling the energization and deenergization of the rotors on an individual basis.
